# EUROPEAN PATENT SPECIFICATION

(11) **EP 0 785 377 B1**
(45) Date of publication and mention of the grant of the patent: **08.08.2001**
(21) Application number: 96830511.0
(22) Date of filing: 08.10.1996
(51) Int. Cl.: F16H 55/22

(54) **Helical gear device for r.p.m. reduction drive assemblies for self-propelling garden apparatus**
Schrägverzahnte Vorrichtung für Drehzahluntersetzung einer selbstfahrenden Gartenmaschine
Dispositif d'engrenage hélicoidal pour mécanisme réducteur de vitesse d'un appareil auto-propulsant de jardinage

(30) Priority: 19.01.1996 IT MI960039 U
(43) Date of publication of application: 23.07.1997
(73) Proprietor: HARRY S.p.A., I-20062 Cassano D'Adda (IT)
(72) Inventor: Soldavini, Teodoro, 20062 Cassano d'Adda (MI) (IT); Bernardi, Guido, 20081 Abbiategrasso (MI) (IT)
(74) Representative: Cicogna, Franco

(56) References cited:
- EP-A- 0 446 655
- EP-A- 0 657 340
- US-A- 2 812 668
- US-A- 4 425 815
- US-A- 4 541 296

## Description

### BACKGROUND OF THE INVENTION

The present invention relates to a helical gear device for R.P.M. reduction drive assemblies for self-propelling garden apparatus.

As is known, in light weight self-propelling apparatus, and in particular in garden self-propelling apparatus, such as mowing machines and the like, are conventionally used drive assemblies applied to the drive wheels, which provide a comparatively high reduction of the R.P.M.'s, as well as a transmission according to 90° of the drive motion.

Conventionally, in the above mentioned applications, the engine has the rotary axis thereof perpendicular to the ground, whereas the drive wheels, will have, obviously, the axis thereof parallel extending to the ground.

A mechanically simple solution for providing the mentioned R.P.M. reduction and a motion transmission at 90° is that of using a worm-helical gear pair assembly.

In the most conventional solutions, the worm is usually made of steel, whereas the helical gear is made of a bronze material.

In a lot of applications, the helical gear is also designed for operating as the driving portion of a friction coupling for clutching and unclutching the motion transmission to the small speed shaft.

A very simple and practical system for providing the friction coupling is that of providing a conical recess, with an apex angle of 20° - 30°, theregainst is urged, in order to engage the transmission for operation, a conical hub, which can slide on the low speed shaft and to which it is rotatively connected.

In the case of a comparatively low power transmissions, which are usually constructed at a comparatively low cost, the helical gears are provided with a cylindrical tooth arrangement, in which the machining of this tooth arrangement is performed on a package of several bronze small cylinders, and not on any individual bronze washer element, as it would be necessary if the tooth arrangement of the gear would encompass the worm, i.e. if the teeth would be formed on a circular sector having the same primitive diameter as that of the worm.

This solution will provide a less specific pressure on the teeth of the helical gear, but, of course, it would require a comparatively higher production cost.

The docurment US-A-2 812 668 discloses a helical gear device substantially according to the preamble of claim 1.

### SUMMARY OF THE INVENTION

Accordingly, the aim of the present invention is to overcome the above mentioned drawbacks, by providing a helical gear which can be made at a very reduced cost, while providing the possibility of reducing the specific pressure on the helical gear teeth, as weel as increasing the pitch diameter to afford the possibility of using a clutching cone having a large diameter.

Within the scope of the above mentioned aim, a main object of the present invention is to provide such a helical gear which can be made from a plastic material, without the need of using a complex making mold.

Another object of the present invention is to provide such a helical gear which, owing to its construction features, is very reliable and safe in operation.

Yet another object of the present invention is to provide a helical gear device which can be easily made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by a helical gear device, for R.P.M. reduction drive assemblies for self-propelling garden apparatus, according to claim 1.

This solution allows to provide in the inside part of the device, at the mentioned second portion of the tooth arrangement having an increasing pitch diameter, a conical surface which can be mated, by a friction type of coupling, to the conical hub element sliding on the slow shaft and to be rotatively coupled to said shaft. This solution also allows to make the helical gear by molding a synthetic or plastic material, which will provide a helical gear of a very reduced cost.

In the case of a high power to be transmitted, the inner conical surface of the helical gear can be reinforced by a suitable metal insert.

### BRIEF DESCRIPTION OF THE DRAWINGS

Further characteristics and advantages of the present invention will become more apparent from the following detailed disclosure of a helical gear device, specifically designed for R.P.M. reduction drive assemblies for self-propelling garden apparatus which is illustrated, by way of an indicative, but not limitative example, in the accompanying drawings, where:

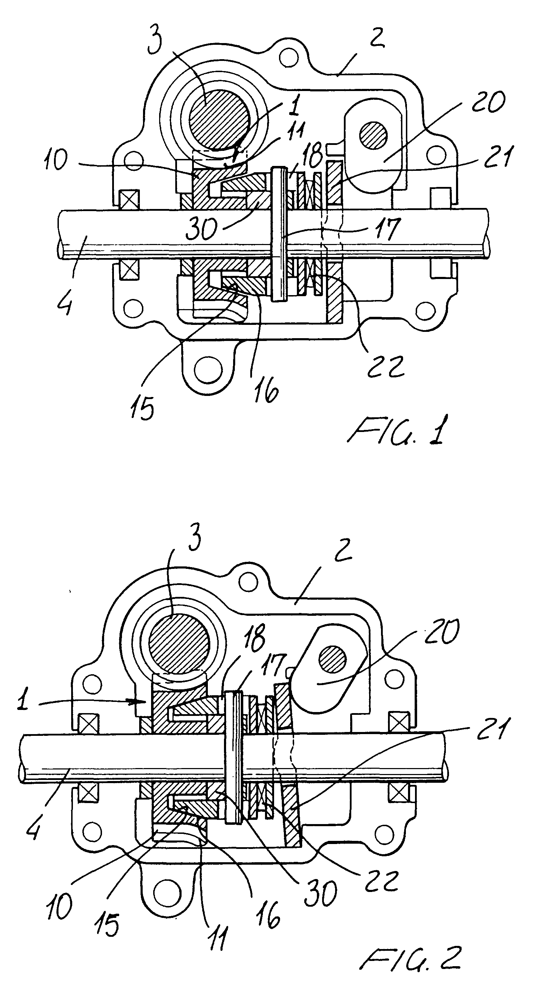

Figure 1 illustrates the helical gear device according to the present invention, in a not reinforced embodiment thereof, as applied to a transmission shown in a disengaged condition thereof;
Figure 2 illustrates the helical gear device according to the present invention, in a not reinforced embodiment thereof, as applied to a transmission being shown in an engaged condition thereof;
Figure 3 illustrates the helical gear device according to the present invention, in a reinforced embodiment thereof, as applied to a transmission being shown in a disengaged condition thereof; and
Figure 4 illustrates the helical gear device according to the present invention in a reinforced embodiment thereof, and as applied to a transmission being shown in an engaged condition thereof.

### DESCRIPTION OF THE PREFERRED EMBODIMENTS

With reference to the figures of the accompanying drawings, the helical gear device according to the present invention, which has been specifically designed for R.P.M. reduction drive assemblies for self-propelling garden apparatus, comprises a helical gear, which is indicated generally by the reference number 1 and which can be arranged inside a transmission casing 2, in which the high R.P.M. motion is supplied through a worm element 3 meshing with the mentioned helical gear 1, which is idly mounted on the slow shaft 4.

The helical gear 1 is provided with a first portion 10 having a cylindrical tooth arrangement having a constant pitch diameter, meeting with a second portion 11, provided with an increasing pitch diameter tooth arrangement, in order to mate the diameter of the worm element to be coupled to the helical gear.

The disclosed specifically designed construction allows to make the helical gear from any suitable plastic materials, by using a comparatively simple mold, and with the possibility of making, in the inside of the gear, a friction cone 15. of a comparatively large size.

The provision of a tooth arrangement which, for a half, is cylindrical and, for the other half thereof, is so designed as to encompass the worm element, will afford a reduction of the specific pressure on the teeth, thereby a sufficiently rigid plastic material cam be used for forming the helical gear.

Moreover, the enlargement of the increasing diameter portion will allow to provide a clutching cone 15, of a large diameter, without impairing the stiffness characteristics of the gear.

In the conical recess 15 a cone 16 can be engaged, which is keyed on the shaft 4 by a pin 17 slidably engaged inside axial recesses 18 formed on the cone.

More specifically, the cone element 16 has a large clutching diameter and, correspondingly, the body of the helical gear will have a sufficient thickness to assure a desired stiffness of the conical surface, as the cone element will provide its clutching pushing force.

More particularly, the cone element is urged in the conical recess 15 by the lever 20 coupled to an outer drive, operating against the urging lever 21 engaging on a pushing bearing 22 provided for axially displacing the cone 16.

As shown, the cone 16 is assembled on a cylindric sleeve element 30 provided for axially guiding said cone and which is rigid with the shaft 4 by the pin 17.

With the disclosed coupling, a female tapering arrangement is obtained suitable to positively operate as a clutching friction element owing to the comparatively high stiffness of the gear, which is mainly due to the enlargement of the second portion 11 or the helical gear.

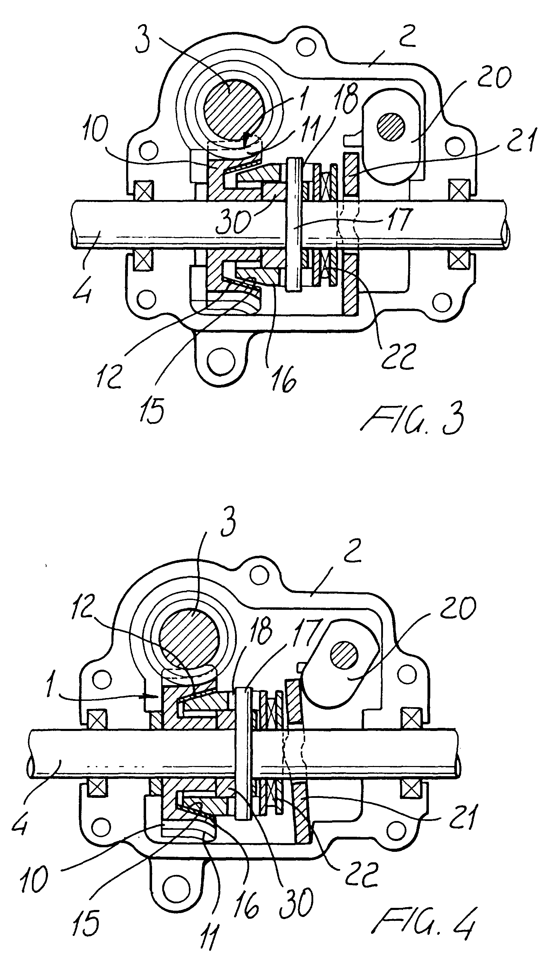

For a heavy duty application, the conical surface 15 can be reinforced by using a metal insert 12 (see figures 3 and 4).

In practicing the invention, the used materials, though the best results have been obtained by using a suitable plastic material, can be changed without departing from the invention scope.

## Claims

1. A helical gear device, for R.P.M. reduction drive assemblies for self-propelling garden apparatus, said helical gear comprising, on a meshing surface thereof, a first plastic material portion (10) having a constant pitch diameter cylindrical tooth arrangement, mating with a second portion (11) having an increasing pitch diameter tooth arrangement, so as to mate the diameter of a worm element to be coupled to said helical gear, characterized in that said second portion (11) has a friction conical surface recess (15) adapted to be friction coupled to a conical hub element (16) sliding on a low-speed shaft (4), to be rotatively coupled to said shaft (4).

2. A helical gear device, according to Claim 1, characterized in that said first portion (10) of said helical gear is made by injecting a plastic material into a constructionally simple and easy made injection mold.

3. A helical gear device, according to any preceding claims, characterized in that said device comprises a conical recess, on the increasing pitch diameter side, for providing a positive coupling with a cone element adapted to provide a clutching friction element.

4. A plastic material helical gear for a helical gear device, according to any preceding claims, characterized in that said friction conical surface recess (15) includes at least a metal reinforcement insert (12) therein.

## Patentansprüche

1. Schrägverzahnte Vorrichtung für Drehzahluntersetzung einer selbstfahrenden Gartenmaschine, wobei die Schrägverzahnung auf einer Eingriffsoberfläche derselben einen ersten Plastikteil (10) mit einer zylindrischen Zahnanordnung mit einem konstanten Wälzkreisdurchmesser aufweist, der zu einem zweiten Teil (11) mit einer Zahnanordnung mit sich erhöhendem Wälzkreisdurchmesser paßt, um zu dem Durchmesser eines mit der Schrägverzahnung zu verbindenden Schneckenelementes zu passen,
**dadurch gekennzeichnet**, daß
der zweite Teil (11) eine Reibungsausnehmung mit konischer Oberfläche (15) aufweist, der so angepaßt ist, daß er per Reibungskupplung mit einer auf einer langsamdrehenden Welle (4) gleitenden konischen Nabenelement (16) verbunden wird, so daß es drehbar mit der Welle (4) verbunden ist.

2. Schrägverzahnte Vorrichtung nach Anspruch 1,
**dadurch gekennzeichnet**, daß
der erste Teil (10) der schrägverzahnten Vorrichtung durch Einspritzen eines Plastikmaterials in eine in bezug auf ihre Konstruktion einfach und leicht hergestellte Einspritzgußform hergestellt wird.

3. Schrägverzahnte Vorrichtung nach beliebigen der vorangegangenen Ansprüche,
**dadurch gekennzeichnet**, daß
die Vorrichtung auf der Seite mit sich erhöhendem Wälzkreisdurchmesser eine konische Ausnehmung aufweist, um eine formschlüssige Kupplung mit einem konischen Element zu bieten, das dafür vorgesehen ist, ein Reibkupplungselement zu bieten.

4. Schrägverzahnung aus Plastikmaterial für eine schrägverzahnte Vorrichtung nach einem beliebigen der vorangegangenen Ansprüche,
**dadurch gekennzeichnet**, daß
die Reibungsausnehmung mit konischer Oberfläche (15) in sich mindestens einen Metallverstärkungseinsatz (12) aufweist.

## Revendications

1. Dispositif d'engrenage hélicoïdal, pour mécanismes réducteurs de vitesse d'un appareil auto-propulsant de jardinage, ledit engrenage hélicoïdal comprenant, sur sa surface à engrenages, une première partie (10) de matériaux plastiques présentant un arrangement denté cylindrique à diamètre constant (« constant pitch diameter ») , accouplée à une seconde partie (11) présentant un arrangement denté à diamètre croissant (« increasing pitch diameter »), pour accoupler le diamètre d'un élément à vis sans fin audit engrenage hélicoïdal, caractérisé en ce que ladite seconde partie (11) présente un logement (15) à surface de friction conique adapté pour être relié par frottement à un élément de moyeu (16) conique glissant sur un arbre (4) à vitesse faible, pour être relié par rotation audit arbre (4).

2. Dispositif d'engrenage hélicoïdal selon la revendication 1 caractérisé en ce que ladite première partie (10) dudit engrenage hélicoïdal est faite par injection d'un matériau plastique à l'intérieur d'un moule d'injection de construction simple et facile à réaliser.

3. Dispositif d'engrenage hélicoïdal selon l'une quelconque des revendications précédentes caractérisé en ce que ledit dispositif comprend une cavité conique, sur le côté du diamètre à pas de vis croissant, pour fournir un couplage positif avec un élément de cône adapté pour fournir un élément d'embrayage par friction ("clutching friction element").

4. Engrenage hélicoïdal à matériaux plastique pour un dispositif d'engrenage selon l'une quelconque des revendications précédentes caractérisé en ce que ledit logement (15) à surface de friction conique inclut au moins un insert (12) de renforcement métallique à l'intérieur.
